# EUROPÄISCHE PATENTANMELDUNG

(11) **EP 2 754 628 A1**
(43) Veröffentlichungstag der Anmeldung: **16.07.2014**
(21) Anmeldenummer: 13190986.3
(22) Anmeldetag: 31.10.2013
(51) Int. Cl.: B65G 51/06

(54) **Rohrposthülse**

(30) Priorität: 09.01.2013 AT 500313 U
(71) Anmelder: Ing. Sumetzberger GmbH, 1110 Wien (AT)
(72) Erfinder: Friedrich, Peter, 1040 Wien (AT)
(74) Vertreter: Müllner, Martin

(57) **Zusammenfassung**

Die Rohrposthülse (9) hat einen Verschluss, der einen ersten Abschnitt (1) aufweist, welcher dicht mit dem Ende der Rohrposthülse (9) verbindbar ist. Erfindungsgemäß ist dieser erste Abschnitt (1) mit einem zweiten, zylindrischen Abschnitt (2) aus Weichschaum verbunden. Dieser Weichschaum füllt allein oder gegebenenfalls mit einem weiteren Weichschaum, der von dem Ende der Rohrposthülse, das diesem Verschluss gegenüberliegt, ausgeht, die Rohrposthülse (9) im unbefüllten Zustand zur Gänze oder bis auf einen schmalen Spalt aus. Dadurch werden empfindliche Güter, wie Proberöhrchen (10), zuverlässig fixiert. Selbst bei einem Bruch werden die Rohre der Rohrpostanlagen wegen des dichten Deckels nicht kontaminiert. Ein zusätzlicher, herkömmlicher Schwenkdeckel (12) kann vorgesehen sein.

## Beschreibung

### Technisches Gebiet

Die vorliegende Erfindung betrifft eine Rohrposthülse mit einem Verschluss, der einen ersten Abschnitt aufweist, welcher dicht mit dem Ende der Rohrposthülse verbindbar ist.

### Stand der Technik

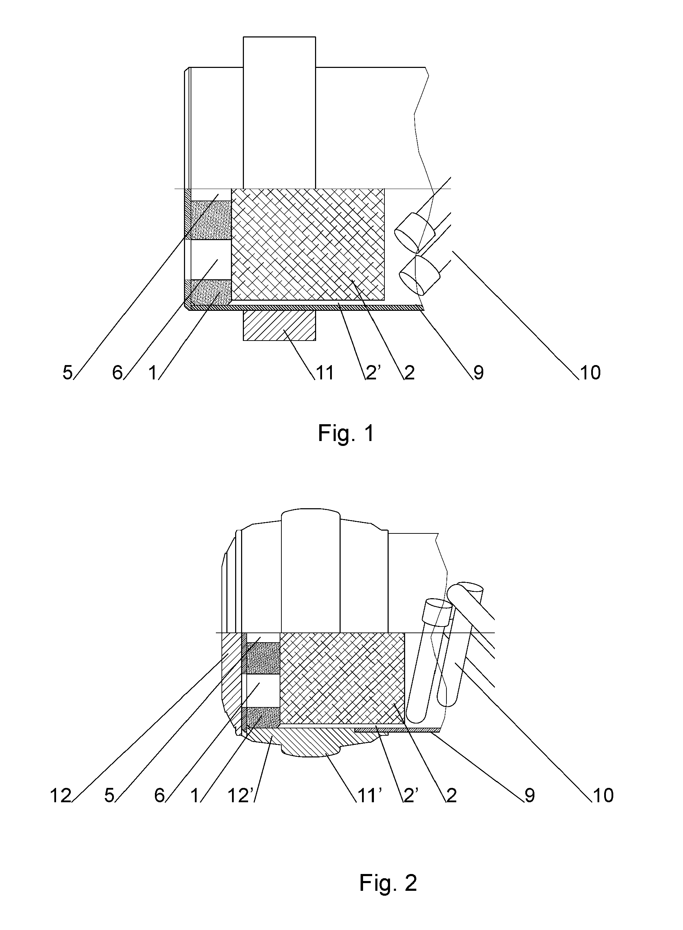

Solch eine Rohrposthülse ist z.B. aus Fig. 2 der EP 49347 Abekannt. Der Verschluss befindet sich mit seinem ersten, zylindrischen Abschnitt innerhalb der Rohrposthülse und ragt mit einem weiteren Abschnitt aus dieser heraus. In diesem weiteren Abschnitt befindet sich eine Nut, sodass der Verschluss automatisch mit entsprechenden Greifern gefasst werden kann.

Es ist weiters bekannt, dass Rohrpostanlagen insbesondere in Spitälern dazu verwendet werden, um Blutproben zu transportieren. Die Blutproben befinden sich dabei in Proberöhrchen, die zerbrechlich sind. Sollte solch ein Proberöhrchen zerbrechen und das Blut - das krankheitserregende Keime enthalten kann - in weiterer Folge aus der Rohrposthülse austreten, hat dies eine Kontamination des entsprechenden Rohrabschnitts der Rohrpostanlage zur Folge. Die Rohrpostanlage muss daher zumindest teilweise stillgelegt werden, damit der Rohrabschnitt gesäubert und desinfiziert werden kann.

Aus diesem Grunde werden für den Transport von Blutproben spezielle Rohrposthülsen eingesetzt. Diese Rohrposthülsen sollen die Proberöhrchen einerseits so fixieren, dass diese nicht zerbrechen können, und andererseits sollen sie dicht sein, sodass selbst für den Fall eines Bruchs das Blut innerhalb der Rohrposthülse bleibt und nicht die Rohrleitungen der Rohrpostanlage verschmutzen kann.

Ein Beispiel für einen Einsatz, mit dem die Proberöhrchen fixiert werden können, ist in AT 12017 U beschrieben. Ein Beispiel für eine dichte Rohrposthülse ist in EP 0968941 Abeschrieben.

Der Nachteil dieser bekannten Ausführungen besteht darin, dass sie erstens relativ aufwändig herzustellen sind und dass sie zweitens bei der Verwendung umständlich sind: es muss die dichte Rohrposthülse geöffnet werden, der Einsatz herausgenommen werden und schließlich muss jedes Proberöhrchen einzeln aus dem Einsatz entfernt oder in diesen eingesetzt werden.

### Kurzbeschreibung der Erfindung

Es ist Aufgabe der vorliegenden Erfindung, diesen Nachteil zu beseitigen und eine Rohrposthülse zu schaffen, die einfach herzustellen ist und einfach mit Proberöhrchen beladen bzw. entleert werden kann und dennoch kein Risiko bezüglich Kontamination von Rohrleitungen bildet.

Diese Aufgabe wird durch eine Rohrposthülse der eingangs genannten Art erfindungsgemäß dadurch gelöst, dass dieser erste Abschnitt mit einem zweiten, zylindrischen Abschnitt aus Weichschaum verbunden ist, und dass entweder dieser Weichschaum allein oder gegebenenfalls mit einem weiteren Weichschaum, der von dem Ende der Rohrposthülse, das diesem Verschluss gegenüberliegt, ausgeht, die Rohrposthülse im unbefüllten Zustand zur Gänze oder bis auf einen schmalen Spalt ausfüllt.

Unter Weichschaum versteht man einen Schaumstoff mit geringer Stauchhärte, also hoher Punktelastizität. Ein typisches Beispiel ist Viskoseschaum. Bei einer erfindungsgemäßen Rohrposthülse kann man einfach den Verschluss und damit den zugehörigen Weichschaum entfernen, die Proberöhrchen in die Rohrposthülse legen oder hineingleiten lassen und dann die Rohrposthülse wieder verschließen. Die Proberöhrchen werden nun vom Weichschaum bzw. zwischen den beiden Weichschäumen fixiert.

Damit auch ein einzelnes Proberöhrchen sicher transportiert werden kann, ist es notwendig, dass bei leerer Rohrposthülse zwischen den beiden Weichschäumen (bzw. wenn nur ein Weichschaum vorgesehen ist zwischen dem Weichschaum und dem Boden der Rohrposthülse) maximal ein derart geringer Abstand verbleibt, dass auch das einzelne Proberöhrchen sicher geklemmt wird; der Abstand muss also jedenfalls geringer sein als der Durchmesser eines typischen Proberöhrchens, z.B. weniger als 1 cm.

Aufgrund der hohen Punktelastizität können die Proberöhrchen auch parallel zur Rohrposthülse angeordnet werden, der Weichschaum gibt ausreichend nach und fixiert die Proberöhrchen in jeder Position.

Überraschenderweise wurde festgestellt, dass es nicht schadet, wenn zwei Proberöhrchen einander berühren oder wenn ein Proberöhrchen die Wand der Rohrposthülse berührt. Vermutlich werden die Proberöhrchen durch den Weichschaum so gut fixiert, dass sie in diesem Fall ständig in Kontakt bleiben und nicht kurzfristig einen Abstand bekommen, um danach gegeneinander zu schlagen. Nur solche Schläge führen zum Bruch.

Der erfindungsgemäße Verschluss bewirkt sowohl die Abdichtung der Rohrposthülse als auch die Fixierung der Proberöhrchen.

Da sich Weichschaum extrem leicht verformt ist es zweckmäßig, wenn der Durchmesser des zweiten Abschnitts geringer ist als der Innendurchmesser der Rohrposthülse, sodass zwischen dem zweiten Abschnitt und der Rohrposthülse ein Spalt verbleibt. Auf diese Weise berührt der Weichschaum die Wand der Rohrposthülse nicht, sodass während des Einsetzens keine Reibung zwischen Weichschaum und Wand auftreten kann, die sonst zu einer unerwünschten Verformung des Weichschaums führen könnte.

Gemäß einer ersten Ausführungsform ist der erste Abschnitt zylindrisch ausgebildet und dicht in das Ende der Rohrposthülse einsetzbar.

In diesem Fall ist es zweckmäßig, wenn der erste, zylindrische Abschnitt auf der dem zweiten, zylindrischen Abschnitt gegenüberliegenden Seite einen Vorsprung aufweist, der als Anschlag beim Einsetzen des Verschlusses in die Rohrposthülse dient. Auf diese Weise braucht beim Verschließen der Rohrposthülse nicht darauf geachtet zu werden, wie tief man den Verschluss hineindrückt.

Damit der Verschluss händisch leicht entfernt werden kann ist es insbesondere bei großen Durchmessern zweckmäßig, wenn der erste, zylindrische Abschnitt auf der dem zweiten, zylindrischen Abschnitt gegenüberliegenden Seite zwei Grifflöcher aufweist, die etwa symmetrisch zur Mittelachse angeordnet sind.

Gemäß einer zweiten Ausführungsform ist der erste Abschnitt kappenförmig ausgebildet, besteht also im Wesentlichen aus einer Platte mit einem Ring.

Damit der Verschluss händisch leicht entfernt werden kann ist es zweckmäßig, wenn der Anschlag bzw. der Ring kreisringförmig ist und außen gewellt oder gerändelt ist oder Rippen aufweist. Dies ist vor allem bei kleinen Hülsendurchmessern sinnvoll, wo der Verschluss zumindest über den halben Umfang mit der Hand umgriffen werden kann.

Für eine automatische Entfernung des Verschlusses ist es günstig, wenn der erste Abschnitt auf der dem zweiten, zylindrischen Abschnitt gegenüberliegenden Seite einen planen, glatten Bereich zum Ansetzen eines Saugnapfes aufweist.

Wenn der erste zylindrische Abschnitt aus einem wenig elastischen Material, wie z.B. aus Vollkunststoff oder aus Aluminium, besteht, ist es zweckmäßig, wenn der erste Abschnitt Dichtlippen aufweist. Bei einem elastischen Material, z.B. Hartschaum, ist der Verschluss in der Regel auch ohne Dichtlippen dicht.

Wenn die Rohrposthülse einen Schwenkdeckel aufweist, der um eine Schwenkachse gelagert ist, ist es zweckmäßig, wenn der erste Abschnitt auf der dem zweiten, zylindrischen Abschnitt gegenüberliegenden Seite eine Aussparung für die Schwenkachse aufweist. So wird eine Kollision vermieden.

Schließlich ist es günstig, wenn der erste Abschnitt auf der dem zweiten, zylindrischen Abschnitt zugewandten Seite eine Vertiefung für einen Transponder aufweist und/oder wenn der zweite, zylindrische Abschnitt auf der dem ersten Abschnitt zugewandten Seite eine Vertiefung für einen Transponder aufweist. Da der Weichschaum in der Regel auf den ersten Abschnitt aufgeklebt wird, ist der Transponder in dieser Ausnehmung unverlierbar gehalten.

### Kurze Beschreibung der Zeichnungsfiguren

An Hand der beiliegenden Zeichnung wird die Erfindung näher erläutert. Es zeigt:

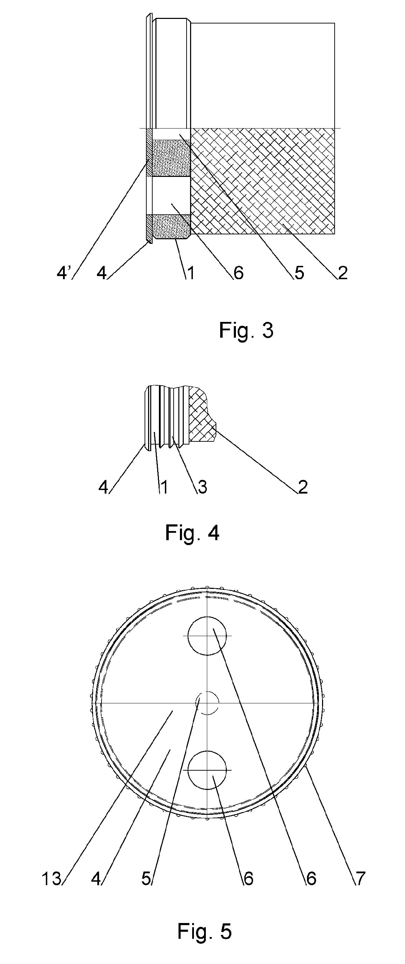

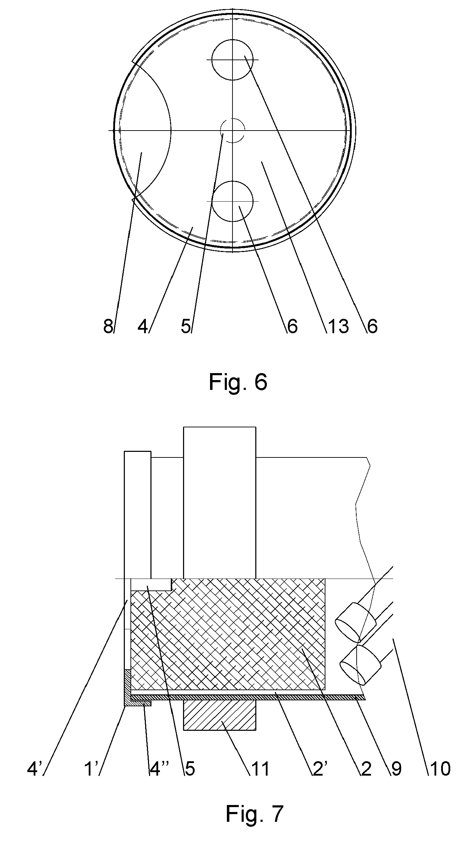

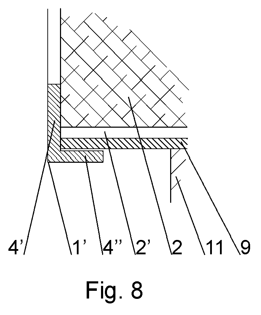

Fig. 1 ein Ende einer Rohrposthülse von der Seite, zum Teil im Schnitt, die nur mit einem erfindungsgemäßen Verschluss versehen ist; Fig. 2 ein Ende einer Rohrposthülse von der Seite, zum Teil im Schnitt, die einen erfindungsgemäßen Verschluss und einen herkömmlichen Hülsenkopf mit Schwenkdeckel aufweist; Fig. 3 einen erfindungsgemäßen Verschluss von der Seite, zum Teil im Schnitt; Fig. 4 ein Detail von Fig. 3 in einer modifizierten Ausführungsform; Fig. 5 einen erfindungsgemäßen Verschluss von oben; Fig. 6 eine andere Ausführungsform des erfindungsgemäßen Verschlusses von oben; Fig. 7 ein Ende einer Rohrposthülse von der Seite, zum Teil im Schnitt, die mit einer anderen Ausführungsform eines erfindungsgemäßen Verschlusses versehen ist; und Fig. 8 ein Detail von Fig. 7.

### Beschreibung der Ausführungsarten

Wie man am besten aus den Fig. 1 und 3 erkennt ist in das Ende einer Rohrposthülse 9, die in üblicher Weise in diesem Bereich einen Gleitring 11 aufweist, ein Verschluss eingesetzt, der im Wesentlichen aus einem ersten zylindrischen Abschnitt 1 und einem zweiten zylindrischen Abschnitt 2 besteht. Der erste zylindrische Abschnitt 1 ist relativ hart; er kann aus Hartschaum oder aus massivem Kunststoff bestehen. Der zweite zylindrische Abschnitt 2 soll jedoch extrem weich sein und besteht daher aus Weichschaum. Die beiden zylindrischen Abschnitte können miteinander verklebt oder auf sonst eine beliebige Weise miteinander verbunden sein.

Auf der dem zweiten Abschnitt 2 gegenüberliegenden Seite des ersten Abschnitts 1 weist dieser einen Anschlag 4 auf. Im vorliegenden Fall befindet sich auf der dem zweiten Abschnitt 2 gegenüberliegenden Seite des ersten Abschnitts 1 eine Scheibe 4', die über den ersten Abschnitt 1 radial vorsteht und so den Anschlag 4 bildet. Diese Scheibe 4' kann auch einstückig mit dem ersten Abschnitt 1 ausgebildet sein. Der Anschlag 4 verhindert, dass der Verschluss zu tief in die Rohrposthülse 9 eingedrückt werden kann, was vor allem bei automatischen Anlagen vorteilhaft ist.

Der erste Abschnitt 1, nicht jedoch die Scheibe 4', weist in der Mitte ein Loch auf, sodass sich eine Vertiefung 5 für einen Transponder ergibt. Man legt den Transponder ein, bevor die beiden Abschnitte 1 und 2 miteinander verklebt werden. Der Transponder ist auf diese Weise unverlierbar gehalten. Die mittige Anordnung der Vertiefung 5 hat den Vorteil, dass der Transponder unabhängig von der Drehung der Rohrposthülse 9 um deren Längsachse immer gleich gut angesprochen werden kann.

Wenn der erste Abschnitt 1 aus elastischem Material hergestellt ist, z.B. aus Hartschaum, kann der Verschluss ohne weitere Maßnahmen in die Rohrposthülse 9 eingesetzt werden, und es ergibt sich ein dichter Verschluss. Wenn die Elastizität des Materials für einen dichten Verschluss nicht ausreicht, können am Umfang des ersten Abschnitts 1 Dichtlippen 3 vorgesehen sein, wie dies in Fig. 4 zu sehen ist.

Wie man insbesondere aus den Fig. 3, 5 und 6 erkennt, weisen der erste Abschnitt 1 und die Scheibe 4' symmetrisch zur Längsachse Grifflöcher 6 auf. Man kann mit Daumen und Zeigefinger in diese beiden Grifflöcher 6 greifen und so den Verschluss entfernen. Wenn der zweite Abschnitt 2, also der Weichschaum, ausreichend flüssigkeitsdicht ist, können die Grifflöcher durch den ersten Abschnitt 1 hindurchgehen, ohne dass die Dichtigkeit des Verschlusses gefährdet wird. Andernfalls müssen die Grifflöcher 6 als Sacklöcher ausgebildet werden.

Besonders bei kleinen Hülsendurchmessern sind Grifflöcher 6 allerdings aus Platzgründen nur schwer anzubringen bzw. liegen für die Bedienungsperson unangenehm knapp beisammen. In diesem Fall kann statt der Grifflöcher 6 oder zusätzlich zu diesen der Rand des Anschlags 4 mit Rippen 7 (siehe Fig. 5) versehen werden, sodass der Verschluss an diesem Anschlag 4 gegriffen werden kann. Statt der Rippen können auch andere Maßnahmen zur Erhöhung der Reibung eingesetzt werden, wie z.B. eine Rändelung, eine Wellung od. dgl.

Für ein automatisches Öffnen des Verschlusses ist in der Mitte ein planer, glatter Bereich 13 vorgesehen. An diesem Bereich 13 kann ein Saugnapf ansetzen, sodass die Rohrposthülse mit diesem Saugnapf automatisch geöffnet werden kann. Insbesondere im Hinblick auf einen ausreichend großen Bereich 13 sind Grifflöcher 6 bei kleinen Hülsendurchmessern problematisch.

Auch wenn der erfindungsgemäße Verschluss normalerweise sehr zuverlässig die Rohrposthülse verschließt, so ist es doch denkbar, dass er sich lockert und sich so die Rohrposthülse in der Rohrpostanlage unvorhergesehen öffnet, insbesondere wenn der Verschluss nicht ausreichend weit hineingedrückt wurde. Solche Unfälle kann man zuverlässig verhindern, wenn man diesen Verschluss in einer Rohrposthülse mit herkömmlichem verriegelbarem Deckel verwendet. In Fig. 2 ist dies beispielsweise an Hand einer Rohrposthülse 9 mit Schwenkdeckel 12 gezeigt. Der Schwenkdeckel 12 ist an einem Hülsenkopf 12' gelagert, in den der Gleitring 11' integriert ist. Bei einem Schwenkdeckel 12 kann es allerdings -je nach Lage der Schwenkachse - sein, dass die Schwenkachse bzw. die zugehörigen Lageraugen mit dem erfindungsgemäßen Verschluss kollidieren. Um dies zu vermeiden, kann der erste Abschnitt eine Aussparung 8 aufweisen, wie dies in Fig. 6 dargestellt ist. Damit die Dichtigkeit des Verschlusses nicht beeinträchtigt wird, befindet sich die Aussparung 8 nur in dem oberen Bereich des ersten Abschnitts 1, also in dem Bereich, der dem zweiten Abschnitt 2 abgewandt ist. Der untere Bereich dichtet über den gesamten Umfang gegen die Rohrposthülse 9 ab.

Eine alternative Ausführungsform ist in den Fig. 7 und 8 zu sehen. Hier ist der erste Abschnitt 1' des Verschlusses kappenförmig ausgebildet, er besteht also im Wesentlichen aus einer Platte 4' mit einem Ring 4". Der zweite Abschnitt 2 ist analog wie zuvor beschreiben ausgebildet, er ist also zylindrisch und weist einen Spalt 2' zum Hülsenrohr 9 auf. Der erste Abschnitt 1' kann analog wie der zuvor beschriebene erste Abschnitt 1 ausgebildet sein, er kann insbesondere auch Dichtlippen aufweisen, und zwar an der Innenseite des Rings 4", und einen planen Bereich zum Ansetzen eines Saugnapfes. Auf Grund der Tatsache, dass die Platte 4' relativ dünn ist, wird man bei dieser Ausführung die Vertiefung 5 für den Transponder besser im zweiten Abschnitt 2, also im Weichschaum, vorsehen.

Wie aus den Fig. 1, 2 und 7 zu ersehen ist, wird der zweite Abschnitt 2, also der Weichschaum, so weit zusammengedrückt, dass er gegen die Proberöhrchen 10 anliegt - unabhängig davon, wie viele bzw. wie große Proberöhrchen 10 in die Rohrposthülse 9 gefüllt werden. Der Weichschaum liegt mit leichtem Druck an den Proberöhrchen 10 an, und dies genügt, um sie in ihrer Lage zu fixieren. Die so fixierten Proberöhrchen überstehen einen Transport durch die Rohrpostanlage unbeschadet.

Es ist besonders günstig, wenn die Rohrposthülse 9 symmetrisch ausgebildet ist, also wenn sie am anderen Ende ebenso mit einem erfindungsgemäßen Verschluss verschlossen ist. Es ist aber auch möglich, dass sie am anderen Ende permanent verschlossen ist. In diesem Fall kann man einen Weichschaum in die Rohrposthülse 9 bis zum anderen Ende einschieben und diesen ständig in der Rohrposthülse 9 belassen. Es ist aber auch denkbar, nur an einem Ende den Weichschaum vorzusehen, wenn dieser die Rohrposthülse im Wesentlichen zur Gänze ausfüllt.

Jedenfalls wenn auch am anderen Ende der Rohrposthülse 9 Weichschaum vorgesehen ist, kann man die Proberöhrchen 10 einfach in die Rohrposthülse 9 einwerfen, ohne dass man befürchten muss, dass sie brechen. Dies erleichtert ein automatisches Befüllen enorm. Umgekehrt kann man eine Rohrposthülse am Ziel einfach ausleeren, z.B. in den Schütttrichter einer Vereinzelungsanlage; auch dies erleichtert eine automatische Manipulation enorm.

## Patentansprüche

1. Rohrposthülse (9) mit einem Verschluss, der einen ersten Abschnitt (1, 1') aufweist, welcher dicht mit dem Ende der Rohrposthülse (9) verbindbar ist, **dadurch gekennzeichnet, dass** dieser erste Abschnitt (1, 1') mit einem zweiten, zylindrischen Abschnitt (2) aus Weichschaum verbunden ist, und dass entweder dieser Weichschaum allein oder gegebenenfalls mit einem weiteren Weichschaum, der von dem Ende der Rohrposthülse, das diesem Verschluss gegenüberliegt, ausgeht, die Rohrposthülse (9) im unbefüllten Zustand zur Gänze oder bis auf einen schmalen Spalt ausfüllt.

2. Rohrposthülse nach Anspruch 1, **dadurch gekennzeichnet, dass** der Durchmesser des zweiten Abschnitts (2) geringer ist als der Innendurchmesser der Rohrposthülse (9), sodass zwischen dem zweiten Abschnitt (2) und der Rohrposthülse (9) ein Spalt (2') verbleibt.

3. Rohrposthülse nach Anspruch 1 oder 2, **dadurch gekennzeichnet, dass** der erste Abschnitt (1) zylindrisch ausgebildet ist und dicht in das Ende der Rohrposthülse (9) einsetzbar ist.

4. Rohrposthülse nach Anspruch 3, **dadurch gekennzeichnet, dass** der erste, zylindrische Abschnitt (1) auf der dem zweiten, zylindrischen Abschnitt (2) gegenüberliegenden Seite einen Vorsprung aufweist, der als Anschlag (4) beim Einsetzen des Verschlusses in die Rohrposthülse (9) dient.

5. Rohrposthülse nach einem der Ansprüche 3 oder 4, **dadurch gekennzeichnet, dass** der erste, zylindrische Abschnitt (1) auf der dem zweiten, zylindrischen Abschnitt (2) gegenüberliegenden Seite zwei Grifflöcher (6) aufweist, die etwa symmetrisch zur Mittelachse angeordnet sind.

6. Rohrposthülse nach Anspruch 1 oder 2, **dadurch gekennzeichnet, dass** der erste Abschnitt (1') kappenförmig ausgebildet ist, also im Wesentlichen aus einer Platte (4') mit einem Ring (4") besteht.

7. Rohrposthülse nach Anspruch 4, 5 oder 6, **dadurch gekennzeichnet, dass** der Anschlag (4) bzw. der Ring (4") kreisringförmig ist und außen gewellt oder gerändelt ist oder Rippen (7) aufweist.

8. Rohrposthülse nach einem der Ansprüche 1 bis 7, **dadurch gekennzeichnet, dass** der erste Abschnitt (1, 1') auf der dem zweiten, zylindrischen Abschnitt (2) gegenüberliegenden Seite einen planen, glatten Bereich (13) zum Ansetzen eines Saugnapfes aufweist.

9. Rohrposthülse nach einem der Ansprüche 1 bis 8, **dadurch gekennzeichnet, dass** der erste Abschnitt (1, 1') Dichtlippen (3) aufweist.

10. Rohrposthülse nach einem der Ansprüche 1 bis 9, **dadurch gekennzeichnet, dass** die Rohrposthülse (9) einen Schwenkdeckel (12) aufweist, der um eine Schwenkachse gelagert ist, und dass der erste Abschnitt (1, 1') auf der dem zweiten, zylindrischen Abschnitt (2) gegenüberliegenden Seite eine Aussparung (8) für die Schwenkachse aufweist.

11. Rohrposthülse nach einem der Ansprüche 1 bis 10, **dadurch gekennzeichnet, dass** der erste Abschnitt (1, 1') auf der dem zweiten, zylindrischen Abschnitt (2) zugewandten Seite eine Vertiefung (5) für einen Transponder aufweist und/oder dass der zweite, zylindrische Abschnitt (2) auf der dem ersten Abschnitt (1, 1') zugewandten Seite eine Vertiefung (5) für einen Transponder aufweist.
